# FASCICULE DE BREVET EUROPEEN

(11) **EP 2 876 611 B1**
(45) Date de publication et mention de la délivrance du brevet: **28.02.2024**
(21) Numéro de dépôt: 14193705.2
(22) Date de dépôt: 18.11.2014
(51) Int. Cl.: G07C 9/00

(54) **Procédé de transmission sécurisée d'une image d'un document d'identité électronique vers un terminal**
Verfahren zur gesicherten Übertragung eines Bildes eines elektronischen Identitätsdokuments an ein Endgerät
Method for secure transmission of an image of an electronic identity document to a terminal

(30) Priorité: 22.11.2013 FR 1361512
(43) Date de publication de la demande: 27.05.2015
(73) Titulaire: IDEMIA France, 92400 Courbevoie (FR)
(72) Inventeur: Feraud, Alban, 92700 Colombes (FR)
(74) Mandataire: Simon, Géraldine Marie

(56) Documents cités:
- EP-B1- 1 236 181
- US-A1- 2003 136 828
- US-A1- 2008 313 082
- US-B1- 7 207 480
- HYPPONEN K ET AL: "2008 The Institution of Engineering and Technology Pseudonymous mobile identity architecture based on government-supported PKI", LECTURE NOTES IN COMPUTER SCIENCE/COMPUTATIONAL SCIENCE > (EUROCRYPT )CHES 2008, SPRINGER, DE , vol. 4968 11 mars 2008 (2008-03-11), pages 107-118, XP002544369, DOI: 10.1007/978-3-540-68979-9_8 ISBN: 978-3-540-24128-7 Extrait de l'Internet: URL:http://www.springerlink.com/content/t0 3x35363511433v/fulltext.pdf [extrait le 2009-09-03]
- HYPPONEN K ET AL: "Combining biometric authentication with privacy-enhancing technologies", LECTURE NOTES IN COMPUTER SCIENCE/COMPUTATIONAL SCIENCE > (EUROCRYPT )CHES 2008, SPRINGER, DE , vol. 4968 11 mars 2008 (2008-03-11), pages 155-165, XP002544370, DOI: 10.1007/978-3-540-68979-9_12 ISBN: 978-3-540-24128-7 Extrait de l'Internet: URL:http://www.springerlink.com/content/kx l338570hxx8338/fulltext.pdf [extrait le 2009-09-03]

## Description

### Arrière-plan de l'invention

La présente invention se rapporte au domaine de la transmission sécurisée de données depuis un document d'identité électronique vers un terminal et concerne plus particulièrement l'identification d'un tel terminal ayant retransmis de manière non autorisée de telles données.

L'invention s'applique notamment, mais de façon non exclusive, à la transmission d'images numériques stockées dans un document d'identité électronique, de type passeport électronique, permis de conduire électronique, carte de santé ou encore carte de signature électronique par exemple.

De façon connue, un document d'identité électronique, tel qu'un passeport électronique par exemple, peut contenir des images numériques transmissibles à un terminal apte à traiter ces images. A l'occasion par exemple d'un contrôle, le document d'identité électronique peut transmettre une telle image numérique à un premier terminal en réponse à une requête du premier terminal. Cette image numérique est en général transmise au terminal avec l'autorisation du propriétaire du document d'identité électronique. Cependant, une fois cette image numérique transmise audit premier terminal, le propriétaire du document d'identité électronique ne peut généralement plus contrôler l'utilisation qui en est faite ensuite par le premier terminal. En particulier, le propriétaire du document d'identité électronique ne peut empêcher par la suite la diffusion éventuelle par le premier terminal de l'image numérique vers des destinations non autorisées. Le manque de contrôle pose donc un problème de sécurité vis-à-vis de l'image numérique en question.

Dans certains cas, le propriétaire peut être dissocié du porteur physique. Dans ces cas le terme propriétaire peut avantageusement être remplacé par le terme porteur, sous-entendu le porteur du document électronique, comme on peut le lire régulièrement dans la documentation spécialisée.

Dans le cas par exemple des passeports électroniques, il est important de pouvoir contrôler si une image numérique transmise lors d'un contrôle d'identité est transmise ultérieurement, sans autorisation, du premier terminal vers un autre terminal. Ce besoin de contrôle est particulièrement critique dans le cas où ces images numériques constituent des informations confidentielles telles qu'une photo d'identité, ou une image biométrique (e.g. une image d'empreinte digitale ou une image d'iris) par exemple.

A titre d'information, l'article scientifique « 2008 The Institution of Engineering and Technology Pseudonymous mobile identity architecture based on government-supported PKI » d'Hypponen K et AI (lecture notes in computer science/computational science CHES 2008, Springer DE, vol. 4968 1 mars 2008, pages 107-118, XP002544369) décrit un procédé de cryptage/décryptage conventionnel dans lequel une image cryptée est transmise d'un premier terminal à un deuxième terminal, ce procédé ne permettant pas de contrôler une diffusion de l'image numérique par le deuxième terminal.

Le document US7207480 B1 décrit un système de certification de photographie numérique.

Il existe donc un besoin pour une solution permettant de contrôler efficacement la diffusion qui peut être faite par un terminal d'une image fournie par un document d'identité électronique (e.g. de type passeport électronique ou permis de conduire électronique).

### Objet et résumé de l'invention

A cet effet, la présente invention concerne un procédé de transmission sécurisée d'une image stockée dans la mémoire d'un document d'identité vers un premier terminal apte à recevoir l'image, le procédé étant mis en oeuvre par le document d'identité, caractérisé en ce que le procédé comprend :
- la réception, en provenance du premier terminal, d'une requête de lecture de l'image,
- la transmission, à destination du premier terminal, d'une requête de lecture d'un attribut dudit premier terminal, ledit attribut étant un identifiant dudit premier terminal,
- la réception d'un attribut transmis par le premier terminal,
- la génération d'un marqueur à partir de l'attribut, le marqueur permettant à un tiers d'identifier le premier terminal,
- l'inclusion du marqueur dans l'image, ladite inclusion modifiant l'apparence visuelle de ladite image ou ladite inclusion comprenant une modification imperceptible de ladite image par codage stéganographique, et
- la transmission au premier terminal de l'image, dite image modifiée, contenant le marqueur.

Dans un mode de réalisation particulier, l'attribut comprend une donnée d'authentification vérifiée par le document d'identité.

L'invention est avantageuse en ce que l'image modifiée transmise à un premier terminal comporte un marqueur ayant des informations relatives au premier terminal, à l'opérateur du premier terminal, ou à la transaction entre le premier terminal et le document d'identité ayant conduit à la transmission au premier terminal de l'image modifiée. L'invention permet ainsi de décourager la diffusion non autorisée de l'image une fois cette dernière transmise au premier terminal, dans la mesure où ces informations permettent d'identifier et donc de trouver le premier terminal ayant conduit à la transmission de l'image, et partant, d'engager la responsabilité du fautif.

Dans un mode de réalisation particulier, l'inclusion du marqueur dans l'image est invisible à l'oeil nu.

Dans un mode de réalisation particulier, lors de la génération, le marqueur est protégé en confidentialité par chiffrement.

Dans un mode de réalisation particulier, lors de la génération, le marqueur est protégé en intégrité et/ou authenticité par signature de l'attribut du premier terminal.

Dans un mode de réalisation particulier, le document d'identité est un passeport électronique. De plus, ledit attribut reçu par le document d'identité est transmis par le premier terminal conformément au protocole EAC pour « Extended Access Control » spécifié dans les directives « TR 03110 v1.11 ».

Le procédé de transmission conforme au protocole EAC comprend par exemple une étape d'authentification mutuelle entre le document d'identité et le premier terminal, la transmission dudit attribut par le premier terminal vers le document d'identité ne se faisant que si l'authentification mutuelle est réalisée au préalable avec succès.

Dans un mode particulier de réalisation, les différentes étapes du procédé de transmission sont déterminées par des instructions de programmes d'ordinateur.

En conséquence, l'invention vise aussi un programme d'ordinateur sur un support d'informations (ou support d'enregistrement), ce programme étant susceptible d'être mis en oeuvre par un microprocesseur d'un document d'identité ou plus généralement dans un ordinateur, ce programme comportant des instructions adaptées à la mise en oeuvre des étapes d'un procédé de transmission tel que défini ci-dessus.

Ce programme peut utiliser n'importe quel langage de programmation, et être sous la forme de code source, code objet, ou de code intermédiaire entre code source et code objet, tel que dans une forme particulière compilée, ou dans n'importe quelle autre forme souhaitable.

L'invention vise aussi un support d'information (ou support d'enregistrement) lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une mémoire non volatile réinscriptible (de type EEPROM ou Flash NAND par exemple), ou tel qu'une ROM, par exemple un CD ROM ou une ROM de circuit microélectronique, ou encore un moyen d'enregistrement magnétique, par exemple une disquette (floppy dise) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Corrélativement, l'invention concerne un document d'identité apte à mettre en oeuvre un procédé de transmission sécurisée d'une image stockée dans la mémoire du document d'identité vers un premier terminal apte à recevoir l'image, le document d'identité comprenant :
- des moyens de réception d'une requête de lecture de l'image en provenance du premier terminal,
- des moyens de transmission, à destination du premier terminal, d'une requête de lecture d'un attribut dudit premier terminal, ledit attribut étant un identifiant dudit premier terminal,
- des moyens de réception d'un attribut transmis par le premier terminal,
- des moyens de génération d'un marqueur à partir de l'attribut, le marqueur permettant à un tiers d'identifier le terminal,
- des moyens d'inclusion du marqueur dans l'image, ladite inclusion modifiant l'apparence visuelle de ladite image (IMG) ou l'inclusion comprenant une modification imperceptible de ladite image par codage stéganographique, et
- des moyens de transmission au terminal de l'image, dite image modifiée, contenant le marqueur.

De plus, l'invention concerne un système tel que défini en revendication 10.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente, de manière schématique, les architectures matérielles d'un document d'identité électronique et d'un premier terminal conformes à un premier mode de réalisation de l'invention ;
- la figure 2 représente, sous forme d'un organigramme, les principales étapes d'un procédé de transmission sécurisée conforme au mode de réalisation de la figure 1 ;
- la figure 3 représente, de manière schématique, un document d'identité électronique, un premier terminal et un tiers de confiance coopérant ensemble conformément à un deuxième mode de réalisation de l'invention ;
- la figure 4 représente, sous forme d'un organigramme, les principales étapes d'un procédé de transmission sécurisée conforme au deuxième mode de réalisation illustré en figure 3 ;
- la figure 5 représente, sous forme d'un organigramme, les principales étapes d'un procédé de détermination d'un attribut conforme à un mode de réalisation particulier de l'invention.

### Description détaillée de plusieurs modes de réalisation

La présente invention se rapporte au domaine de la transmission sécurisée de données depuis un dispositif électronique vers un terminal et concerne plus particulièrement l'identification d'un tel terminal ayant conduit à une transmission d'image numérique entre le document d'identité électronique et le terminal, le terminal ayant retransmis de manière non autorisée de telles données.

Le marqueur MQ est dans un exemple un tatouage numérique. Un tatouage numérique est une marque ou un message inclus dans une donnée numérique permettant d'ajouter des informations à ladite donnée numérique.

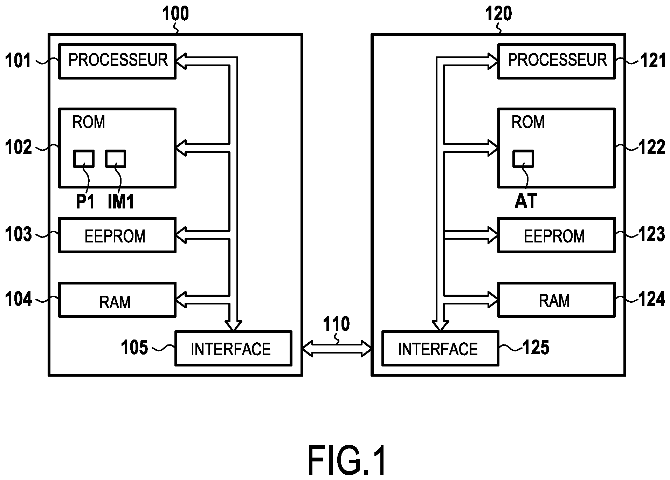

La **figure 1** représente, de manière schématique et selon un premier mode de réalisation, un document d'identité électronique 100 configuré pour pouvoir coopérer, via une première liaison de communication 110, avec un premier terminal 120. Cette première liaison de communication 110 peut être une liaison par contact ou une liaison sans fil selon le cas.

Le document d'identité électronique 100 est par exemple de type passeport électronique ou permis de conduire électronique. On comprendra toutefois que l'invention s'applique plus généralement à un dispositif électronique apte à transmettre une image stockée dans une mémoire du dispositif électronique.

Le document d'identité électronique 100 présente l'architecture conventionnelle d'un ordinateur. Ledit document d'identité électronique 100 comporte notamment un microprocesseur 101, une mémoire morte 102 (de type ROM), une mémoire non volatile réinscriptible 103 (de type EEPROM ou Flash NAND par exemple), une mémoire volatile réinscriptible 104 (de type RAM), et une interface d'entrées et sorties 105.

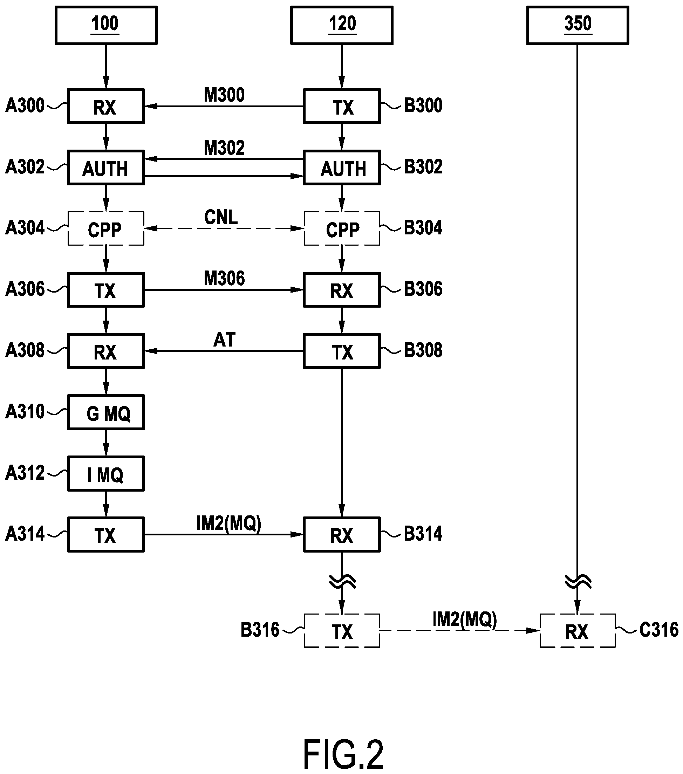

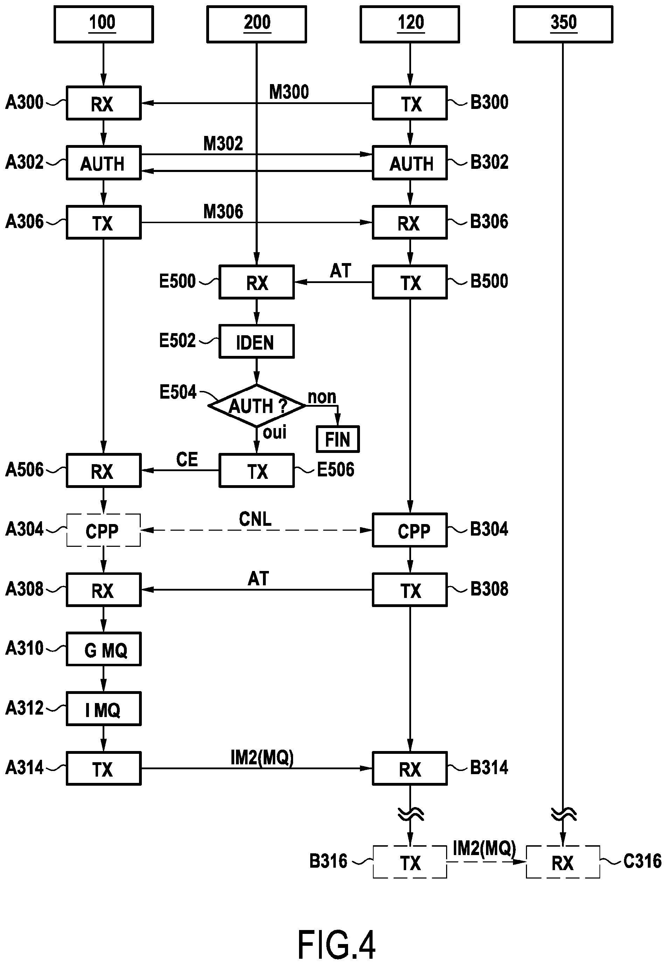

Dans cet exemple, la mémoire morte 102 constitue un support d'informations (ou d'enregistrement) conforme à un mode de réalisation particulier de l'invention. Dans la mémoire morte 102 est stocké un programme d'ordinateur P1 permettant au document d'identité électronique 100 de mettre en oeuvre un procédé de transmission conforme à un mode de réalisation particulier de l'invention (cf. figures 2 et 4). De plus, une image numérique IM1 est stockée dans la mémoire morte 102. En variante, le programme d'ordinateur P1 est stocké dans la mémoire non volatile réinscriptible 103, et l'image numérique IM1 est stockée dans la mémoire non volatile réinscriptible 103, ou la mémoire volatile réinscriptible 104. Dans le cas présent où le document d'identité électronique 100 est un passeport électronique par exemple, l'image numérique IM1 peut être une donnée biométrique telle qu'une image d'empreinte digitale ou une image d'iris de globe oculaire.

Le premier terminal 120 présente également l'architecture conventionnelle d'un ordinateur. Le premier terminal 120 comporte notamment un microprocesseur 121, une mémoire morte 122 (de type ROM), une mémoire non volatile réinscriptible 123 (de type EEPROM ou Flash NAND par exemple), une mémoire volatile réinscriptible 124 (de type RAM), et une interface d'entrées et sorties 125, cette dernière étant adaptée pour coopérer avec l'interface d'entrées et sorties 105 du dispositif électronique 100 afin de permettre l'échange de signaux entre le premier terminal 120 et ledit dispositif électronique 100.

La mémoire morte 122 du premier terminal 120 comprend dans cet exemple un attribut AT du premier terminal 120. En variante, l'attribut AT est stocké dans la mémoire non volatile réinscriptible 123, ou bien en dehors du premier terminal 120 (entité externe). Cet attribut AT est un identifiant dudit premier terminal 120 ayant conduit à une transmission d'image numérique entre le document d'identité électronique 100 et le premier terminal 120. L'identifiant du premier terminal 120 est dans un exemple un nom dudit premier terminal 120 ou un numéro de série (e.g. l'adresse MAC du premier terminal 120).

La **figure 2** représente, toujours selon le premier mode de réalisation, un procédé de transmission mis en oeuvre par le document d'identité électronique 100 exécutant le programme P1.

On considère par exemple le cas particulier où un passeport électronique est contrôlé par un agent de la douane lors d'un contrôle d'identité au moyen du premier terminal 120.

Dans une étape B300, le premier terminal 120 envoie une requête M300 de lecture de l'image numérique IM1 stockée dans le document d'identité électronique 100. Cet envoi B300 survient par exemple lorsque le passeport électronique est présenté à proximité de l'interface 125 du premier terminal 120 (dans le cas où la première liaison de communication 110 est une liaison sans fil).

Cette étape B300 est suivie d'une étape A302, B302 d'authentification réalisée collectivement par le document d'identité électronique 100 et par le terminal 120 respectivement. Lors de cette étape A302, B302, le premier terminal 120 envoie au moins une donnée (message M302) permettant au document d'identité électronique 100 d'authentifier le premier terminal 120.

Si le premier terminal 120 est authentifié avec succès par le document d'identité électronique 100, un canal de communication CNL sécurisé est ensuite créé (A304, B304) entre le document électronique 100 et le premier terminal 120. Ce canal de communication CNL sécurisé assure la confidentialité et/ou l'intégrité et/ou l'authenticité des échanges. Dans la suite de cet exemple, le document d'identité électronique 100 et le premier terminal 120 communiquent ensemble de façon sécurisée via le canal de communication CNL.

Suite à l'étape A304, le dispositif électronique 100 envoie (A306) au premier terminal 120, une requête M306 de lecture de l'attribut AT du premier terminal 120.

Sur réception d'une telle demande, le premier terminal 120 envoie (B308) au document d'identité électronique 100 l'attribut AT.

Alternativement et non revendiqué, le premier terminal 120 envoie spontanément (B308) l'attribut AT sans une requête préalable M306 provenant du document d'identité électronique 100. La communication au moyen du canal de communication CNL sécurisé permet au document électronique 100 de s'assurer par exemple de l'authenticité de l'attribut AT du premier terminal 120. En effet, ce canal étant sécurisé, aucun système extérieur ne peut communiquer avec le document d'identité électronique 100 ce qui permet de garantir que l'attribut AT est lié au premier terminal 120 et ainsi de vérifier l'identité du premier terminal 120.

En variante, l'étape A304, B304 de création du canal de communication CNL sécurisé n'est pas réalisée. Dans ce cas non revendiqué, le document d'identité électronique 100 reçoit l'attribut AT relatif au premier terminal 120 d'une entité tierce, d'une manière assurant au moins l'intégrité et l'authenticité dudit attribut AT. Dans un mode de réalisation, l'attribut AT est reçu via un certificat électronique, certifié (ou émis) par une entité connue du document d'identité électronique 100.

En variante non revendiquée, les étapes A304, B304, A306, B306 et A308, B308 ne sont pas réalisées et l'attribut AT est envoyé par le premier terminal 120 lors de l'étape B302 d'authentification, d'une manière garantissant son intégrité et son authenticité.

Dans un mode de réalisation particulier non revendiqué, les étapes A302, B302 et A304, B304 ne sont pas réalisées et l'attribut envoyé par le premier terminal 120, comprend une donnée d'authentification vérifiée par le document d'identité électronique 100 pour autoriser la transmission de l'image entre le document d'identité électronique 100 et le premier terminal 120. Cette donnée d'authentification est émise par une entité tierce et/ou par le premier terminal 120. Dans un exemple, la donnée d'authentification est un certificat, c'est-à-dire un élément cryptographique garantissant l'authenticité et l'intégrité, donc la provenance et la non modification de l'attribut AT (e.g. une adresse MAC pour « Message Authentication Code » ou une signature numérique).

Suite à la réception de l'attribut AT par le document d'identité électronique 100, le document d'identité électronique 100 génère (A310) un marqueur MQ à partir de l'attribut AT.

Le marqueur MQ est dans un exemple un tatouage numérique. Un tatouage numérique est une marque ou un message inclus dans une donnée numérique permettant d'ajouter des informations à ladite donnée numérique.

Dans un exemple, l'information contenue dans le marqueur MQ est l'attribut AT. Alternativement, le marqueur MQ peut contenir une partie de l'attribut AT. Selon encore un autre exemple, le document d'identité électronique 100 génère (A310) le marqueur MQ par calcul à partir de l'attribut AT. Le marqueur MQ peut par exemple être l'attribut AT sous forme cryptée.

Dans un exemple, lors de la génération A310 du marqueur MQ, le marqueur MQ est protégé en confidentialité par chiffrement. L'algorithme de chiffrement est par exemple, un algorithme de chiffrement symétrique par bloc (« Data Encryption Standard » en terminologie anglo-saxonne) utilisant le mode d'opération de chiffrement à rétroaction (« Cipher Block Chaining » en terminologie anglo-saxonne).

Dans un autre exemple, lors de la génération A310 du marqueur MQ, le marqueur MQ est protégé en intégrité et éventuellement authenticité par signature de l'attribut AT du premier terminal 120.

Dans un autre exemple, lors de la génération A310 du marqueur MQ, le marqueur MQ est protégé en intégrité par l'ajout d'un code correcteur d'erreur sur l'attribut AT du premier terminal 120.

Dans un autre exemple, lors de la génération A310 du marqueur MQ, ledit marqueur MQ est protégé en confidentialité par chiffrement et est protégé en intégrité et authenticité par signature de l'attribut AT du premier terminal 120.

Ensuite, dans une étape A312, ledit document d'identité électronique 100 inclut le marqueur MQ dans l'image numérique IM1 stockée dans la mémoire 102. L'inclusion du marqueur MQ est de préférence effectuée dans une copie de l'image numérique IM1 afin de conserver en mémoire l'image numérique IM1 originale. Dans ce cas, la copie de l'image numérique IM1 contenant le marqueur MQ peut également être stockée provisoirement dans la mémoire 103 ou 104.

Suivant l'invention, le marqueur MQ peut être un marqueur perceptible visuellement par des tiers et destructif, dans le sens où l'inclusion de ce marqueur à l'image numérique IM1 modifie l'apparence visuelle de l'image numérique IM1. Suivant l'invention, le marqueur MQ peut être invisible à l'oeil nu, dans le sens où ce marqueur MQ ne modifie pas l'apparence visuelle de l'image numérique IM1. Dans ce dernier cas, les données de l'image numérique IM1 contiennent le marqueur MQ sans que le marqueur MQ soit perceptible visuellement pour un individu (ou une machine) contrôlant cette image numérique IM1.

Suivant l'invention, le marqueur MQ peut être inclus à l'image numérique IM1 de façon imperceptible par codage stéganographique. Le marqueur MQ est par exemple dissimulé au niveau de la valeur de bits de poids faible codant les pixels de l'image numérique IM1, ou au niveau du format de l'image numérique IM1, en utilisant une compression avec perte.

Dans un exemple, après l'inclusion du marqueur MQ, l'image numérique conserve un format d'image numérique.

Dans un exemple, après l'inclusion du marqueur MQ, l'image numérique conserve le même format d'image numérique.

Le format d'image numérique peut être un format standard ou normalisé (e.g JPEG, GIF, PNG, ou TIFF).

Dans un exemple, l'inclusion du marqueur est irréversible, dans le sens où cette inclusion modifie de manière irréversible l'image (e.g. compression avec perte).

Dans un exemple, l'inclusion du marqueur MQ dans l'image numérique IM1 modifie la valeur d'au moins un pixel. Cette modification de la valeur d'au moins un pixel peut être visible ou invisible à l'oeil nu.

Par « visible à l'oeil nu », on entend dans ce document visible sans avoir recours à un outil de contrôle approprié (de type standard ou dédié par exemple). Ce que l'on entend par un élément visible à l'oeil nu est décrit dans le document intitulé « *How to select a security feature* » (émis par « *The document security alliance and the north american security products organization* ») sous la dénomination « Overt » ou « first-level ».

Ensuite, le document d'identité électronique 100 transmet (A314) au premier terminal 120 l'image numérique contenant le marqueur MQ, nommée ici image numérique modifiée IM2 par souci de clarté.

Après réception B314 de cette image numérique modifiée IM2, un contrôle de l'image numérique modifiée IM2 peut être réalisé au niveau du premier terminal 120, afin par exemple de réaliser un contrôle d'identité du porteur du passeport électronique 100. Comme expliqué précédemment, il n'est en général pas possible pour le porteur du document d'identité électronique 100 de contrôler ou d'empêcher l'usage qui est fait ultérieurement de l'image par l'utilisateur du premier terminal 120. Dans le cas par exemple où l'image numérique modifiée IM2 est une photo d'identité, le porteur du dispositif électronique 100 peut légitimement souhaiter que la diffusion de l'image numérique modifiée IM2 soit restreinte par exemple à un usage bien particulier (e.g. un contrôle d'identité).

Le caractère sensible ou confidentiel de l'image numérique IM2 peut en particulier nécessiter que toute diffusion ultérieure par le premier terminal 120 vers l'extérieur soit contrôlée.

Dans un exemple, après réception B314 de l'image numérique modifiée IM2, cette image numérique modifiée IM2 (dans laquelle le marqueur MQ est inclus) est affichée par le premier terminal 120.

Dans un exemple, l'inclusion du marqueur MQ dans l'image numérique IM1 ne nécessite aucun traitement particulier par le terminal 120 pour que ce dernier affiche l'image numérique modifiée IM2.

Dans un exemple, l'image numérique modifiée IM2 est transmise sous forme non cryptée par le document d'identité électronique 100 au terminal 120. Dans ce cas, le terminal 120 peut afficher l'image numérique modifiée IM2 sans traitement préalable.

La présente demande couvre toutefois des variantes de réalisation non revendiquées selon lesquelles le premier terminal 120 n'affiche pas l'image numérique modifiée IM2 après l'étape de réception B314.

Dans un mode de réalisation particulier non revendiqué, l'image numérique modifiée IM2 est utilisée par le terminal 120 à des fins de traitements internes. Par exemple, dans le cas où l'image numérique IM2 est une image d'empreinte biométrique provenant d'un document de voyage biométrique, le terminal 120 peut l'utiliser pour authentifier de manière forte le porteur dudit document de voyage à l'aide d'une comparaison biométrique avec une image d'empreinte biométrique provenant du porteur du document.

On considère à présent le cas où le premier terminal 120 transmet (B316) l'image numérique modifiée de façon non autorisée à un tiers, par exemple à un second terminal 350. Alternativement, on peut envisager que l'envoi B316 par le premier terminal 120 soit autorisé mais que le second terminal 350 transmette à son tour de façon non autorisée l'image numérique modifiée IM2 vers une autre destination.

La présence du marqueur MQ dans l'image numérique modifiée IM2 offre la possibilité de déterminer ultérieurement l'entité initialement à l'origine de cette diffusion non autorisée. L'invention permet avantageusement, à partir du marqueur MQ présent dans l'image numérique modifiée IM2, d'identifier le premier destinataire qui a initialement reçu l'image numérique modifiée IM2 en provenance du document d'identité électronique 100, à savoir le premier terminal 120 ou l'opérateur du premier terminal 120 dans le cas présent. En effet, comme indiqué ci-avant, le marqueur MQ est généré (A310) par le document d'identité électronique 100 à partir de l'attribut AT, ce dernier étant propre au premier terminal 120, à l'opérateur du premier terminal 120, ou à la transaction entre le premier terminal 120 et le document d'identité électronique 100 ayant conduit à la transmission au premier terminal 120 de l'image numérique modifiée IM2. La récupération ultérieure du marqueur MQ permet donc de déterminer l'identité du premier terminal 120.

Une fois le premier terminal 120 détecté comme étant le destinataire original de l'image numérique modifiée IM2 en cause, il est possible de procéder aux démarches nécessaires pour déterminer les raisons de la diffusion ultérieure (B316) de l'image numérique modifiée IM2 vers d'autres entités et, si besoin, remonter la chaîne de diffusion afin de déterminer les responsabilités des acteurs mis en cause.

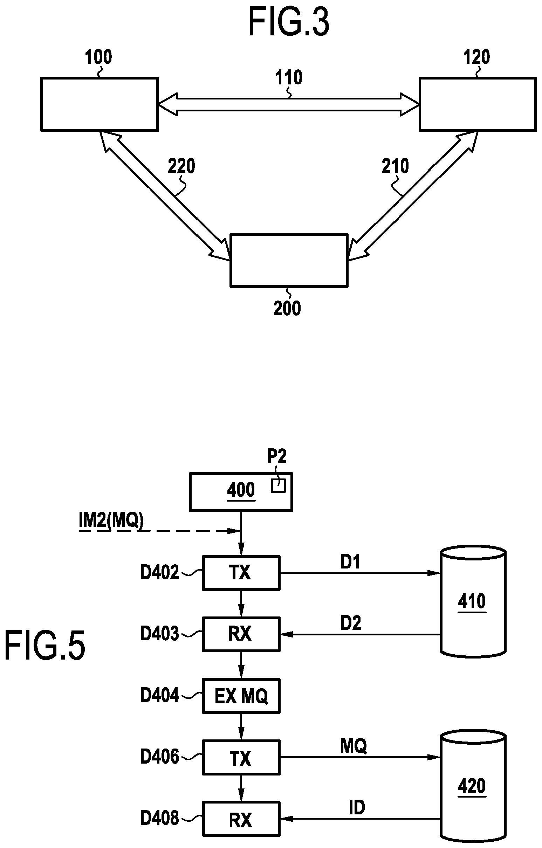

Un exemple de réalisation d'un procédé de détermination de l'attribut AT à partir du marqueur MQ intégré à l'image numérique modifiée IM2, permettant donc de déterminer l'identité du destinataire original sera décrit ultérieurement en référence à la figure 5.

A noter que, dans le présent document, les éléments communs à deux modes de réalisation distincts portent les mêmes numéros de référence et présentent des caractéristiques identiques de sorte qu'ils ne sont pas à nouveau décrits par souci de simplicité.

La **figure 3** représente, de manière schématique et selon un deuxième mode de réalisation non revendiqué, le document d'identité électronique 100, le premier terminal 120 et un tiers de confiance 200. Comme déjà indiqué, le document d'identité électronique 100 peut coopérer avec le premier terminal 120 via la première liaison de communication 110. De plus, le premier terminal 120 coopère avec le tiers de confiance 200 via une deuxième liaison de communication 210. En outre le document d'identité électronique 100 coopère avec le tiers de confiance 200 via une troisième liaison de communication 210.

La **figure 4** représente, toujours selon le deuxième mode de réalisation non revendiqué, un procédé de transmission mis en oeuvre par le document d'identité électronique 100 exécutant le programme P1. Ce deuxième mode de réalisation est une variante du premier mode de réalisation décrit ci-avant en référence à la figure 2 et diffère uniquement en ce qu'un tiers de confiance 200 intervient pour vérifier l'authenticité du premier terminal 120 avant que le premier terminal 120 procède à l'envoi B308 de l'attribut AT.

Selon ce procédé, le premier terminal 120 envoie une requête M300 de lecture de l'image numérique IM1 stockée dans le document d'identité électronique 100 (étape B300).

Cette étape B300 est suivie de l'étape A302, B302 d'authentification.

Suite à l'étape A302, B302, le document d'identité électronique 100 envoie au premier terminal 120 une requête M306 de lecture de l'attribut AT dudit premier terminal 120 (étape A306).

Sur réception d'une telle requête, le premier terminal 120 envoie cet attribut AT au tiers de confiance 200 dans une étape B500.

Ledit tiers de confiance 200 identifie et authentifie alors ledit premier terminal 120, ce qui permet de connaître l'identité du premier terminal 120 (étape E502).

Ensuite, si l'attribut AT correspond à un premier terminal 120 autorisé à recevoir l'image numérique IM1 du document d'identité électronique 100 (étape E504), le tiers de confiance 200 envoie, dans une étape E506, un certificat électronique CE au document d'identité électronique 100. Ce certificat électronique CE est une garantie du tiers de confiance 200, montrant que le premier terminal 120 a été identifié par le tiers de confiance 200 comme étant un terminal autorisé.

En variante, le tiers de confiance 200 envoie le certificat électronique CE au terminal 120, qui transmet alors le certificat électronique CE au document d'identité 100.

Les étapes suivantes sont réalisées de manière identique aux étapes correspondantes du premier mode de réalisation de la figure 1.

En particulier, le canal de communication CNL est alors créé entre le document électronique 100 et le premier terminal 120 (étape A304, B304).

En variante, l'étape A304, B304 de création du canal de communication CNL n'est pas réalisée, comme déjà expliqué en référence à la figure 2.

En variante, les étapes A304, B304, A306 et B308 ne sont pas réalisées et l'attribut AT est envoyé lors de l'étape A302, B302 d'authentification, comme déjà expliqué en référence à la figure 2.

La **figure 5** représente schématiquement les principales étapes d'un procédé de détermination de l'attribut AT à partir du marqueur MQ intégré à l'image numérique modifiée IM2, permettant donc de déterminer l'identité du premier terminal 120 selon un mode de réalisation particulier. Ce procédé est ici mis en oeuvre par un troisième terminal 400 exécutant un programme P2, ledit troisième terminal 400 ayant reçu l'image numérique modifiée IM2 du deuxième terminal 350 ou d'un autre terminal. Dans un exemple, ledit autre terminal appartient à une personne de bonne foi ou à une autorité de police.

A noter que le procédé peut être mis en oeuvre par le deuxième terminal 350 lui-même exécutant le programme P2, ledit deuxième terminal 250 ayant reçu l'image numérique modifiée IM2. Dans ce cas, les deuxième et troisième terminaux 350, 400 constituent un seul et même terminal.

Le troisième terminal 400 a ici une architecture matérielle identique à celle du premier terminal 120. Plus précisément, le deuxième terminal 350 et le troisième terminal 400 comportent chacun un microprocesseur, une mémoire morte (de type ROM), une mémoire non volatile réinscriptible (de type EEPROM ou Flash NAND par exemple), une mémoire volatile réinscriptible (de type RAM), et une interface d'entrées et sorties.

On suppose donc ici que le troisième terminal 400 à précédemment reçu l'image numérique modifiée IM2 contenant le marqueur MQ.

Le procédé de détermination de l'attribut AT selon ce mode particulier de réalisation non revendiqué comprend une étape D402 d'envoi, à une première base de données 410, d'une première donnée D1 obtenue à partir de ladite image numérique modifiée IM2 et une étape D403 de réception, en réponse à l'envoi de la première donnée D1, d'une deuxième donnée D2 en provenance de la première base de donnée 410.

Plus précisément, la première donnée D1 peut être l'image numérique modifiée IM2, une partie de l'image numérique modifiée IM2, ou une information incluse dans l'image numérique modifiée IM2. A partir de cette première donnée D1, la base de données 410 trouve la deuxième donnée D2, cette dernière comprenant des informations d'extraction permettant d'extraire le marqueur MQ de l'image numérique modifiée IM2. Ces informations d'extraction peuvent comprendre par exemple au moins l'un parmi :
- le type de marqueur MQ, par exemple un type permettant de déterminer si le marqueur MQ est un marqueur MQ perceptible ou un marqueur MQ imperceptible comme expliqué précédemment,
- le type d'algorithme utilisé pour générer le marqueur MQ, et
- la localisation dudit marqueur MQ et du mode de protection dudit marqueur MQ, c'est-à-dire si le marqueur MQ est protégé en confidentialité par chiffrement, ou si le marqueur MQ est protégé en intégrité par signature de l'attribut AT.

Ensuite, le troisième terminal 400 extrait (D404) le marqueur MQ de l'image numérique modifiée IM2 en utilisant les informations d'extraction de la deuxième donnée D2 (étape D404). Dans un exemple, l'extraction du marqueur MQ comporte la révélation, et/ou le déchiffrement, et/ou la vérification d'intégrité et/ou la vérification d'authenticité du marqueur MQ. Dans un exemple, l'extraction du marqueur MQ comprend l'affichage de l'image numérique modifiée IM2 avec le marqueur MQ visible.

Dans une étape D406, le troisième terminal 400 envoie le marqueur MQ à une deuxième base de données 420. En réponse à cet envoi, un identifiant du premier terminal 120 correspondant au marqueur MQ est récupéré (D408) par le troisième terminal 400. Dans un exemple, l'identifiant est l'attribut AT du premier terminal 120 lui-même.

Dans le cas où l'image numérique modifiée IM2 est transmise par le premier terminal 120 à un deuxième terminal 350 (étape B316), le marqueur MQ inclus dans ladite image numérique modifiée IM2 permet de déterminer l'identité du premier terminal 120. Dans le cas où cette transmission de l'image numérique modifiée IM2 au deuxième terminal 350 n'était pas autorisée, le marqueur MQ permet ainsi de mettre en cause si besoin la responsabilité du premier terminal 120.

Dans une variante non revendiquée, le procédé de détermination de l'attribut AT décrit ci-dessus peut être appliqué par analogie dans le cas où le marqueur MQ contient les informations relatives à la transaction entre le document d'identité électronique 100 et le premier terminal 120, ou bien les informations relatives à l'opérateur du premier terminal 120.

Un exemple de réalisation est celui d'un passeport électronique 100 conforme à la fois aux spécifications de l'« OACI » (« Organisation de l'Aviation Civile Internationale »), et aux exigences techniques européennes pour les documents de voyages. Le protocole « EAC » (« Extended Access Control » en terminologie anglo-saxonne), spécifié dans les directives « TR 03110 v1.11 » (requis pour les documents de voyage européens) permet alors de transmettre au passeport électronique 100 des attributs AT relatifs au terminal, comme l'identification dudit terminal (appelé « CHR »), ou à l'échange, comme la date de réalisation (appelée « Effective date »), et ce, certifié, soit par le « CVCA » (« Country Vérification Certificate Authority » en terminologie anglo-saxonne), ou le DV (« Document Vérifier » en terminologie anglo-saxonne). Une authentification mutuelle réussie conformément au protocole « EAC » (spécifié dans les directives « TR 03110 v1.11 »), autorise le terminal 120 à accéder à l'image de l'empreinte biométrique (doigt et/ou iris du globe oculaire) contenu dans le passeport électronique 100. Ledit passeport électronique 100 peut alors dans ce cas retourner au terminal 120 l'image demandée, dans laquelle sera inclus le marqueur MQ reprenant le ou les attributs AT cités ci-dessus (date de l'échange et/ou identification du terminal par exemple).

## Revendications

1. Procédé de transmission sécurisée d'une image (IM1) stockée dans la mémoire d'un document d'identité (100) vers un premier terminal (120) apte à recevoir ladite image (IM1), ledit procédé étant mis en oeuvre par ledit document d'identité (100), **caractérisé en ce que** ledit procédé comprend :
- la réception (A300), en provenance du premier terminal (120), d'une requête de lecture de l'image (IM1),
- la transmission (A306), à destination du premier terminal (120), d'une requête de lecture d'un attribut (AT) dudit premier terminal (120), ledit attribut (AT) étant un identifiant dudit premier terminal (120),
- la réception (A308) de l'attribut (AT) transmis par le premier terminal (120),
- la génération (A310) d'un marqueur (MQ) à partir de l'attribut (AT), le marqueur permettant à un tiers d'identifier le premier terminal (120),
- l'inclusion (A312) dudit marqueur (MQ) dans l'image (IM1), ladite inclusion modifiant l'apparence visuelle de ladite image (IMG) ou ladite inclusion comprenant une modification imperceptible de ladite image par codage stéganographique, et,
- la transmission (A314), au premier terminal (120), de l'image, dite image modifiée (IM2), contenant ledit marqueur (MQ).

2. Procédé de transmission selon la revendication 1, dans lequel l'attribut (AT) comprend une donnée d'authentification vérifiée par le document d'identité (100).

3. Procédé de transmission selon la revendication 1, dans lequel si l'inclusion comprend une modification de ladite image par codage stéganographique, ledit marqueur (MQ) inclus dans l'image (IM1) est invisible à l'oeil nu.

4. Procédé de transmission selon l'une quelconque des revendications 1 à 3, dans lequel, lors de la génération, le marqueur (MQ) est protégé en confidentialité par chiffrement.

5. Procédé de transmission selon l'une quelconque des revendications 1 à 4, dans lequel, lors de la génération, le marqueur (MQ) est protégé en intégrité et/ou authenticité par signature de l'attribut (AT) du premier terminal (120).

6. Procédé de transmission selon l'une quelconque des revendications 1 à 5, dans lequel le document d'identité (100) est un passeport électronique,
dans lequel ledit attribut (AT) reçu par le document d'identité (100) est transmis par le premier terminal (120) conformément au protocole « Extended Access Control » spécifié dans les directives « TR 03110 v1.11 ».

7. Programme d'ordinateur (P1) comportant des instructions pour l'exécution des étapes d'un procédé de transmission selon l'une quelconque des revendications 1 à 6 lorsque ledit programme (P1) est exécuté par un microprocesseur intégré dans un document d'identité (100).

8. Support d'enregistrement lisible par un ordinateur sur lequel est enregistré un programme d'ordinateur (P1) comprenant des instructions pour l'exécution des étapes d'un procédé de transmission selon l'une quelconque des revendications 1 à 6.

9. Document d'identité (100) apte à mettre en oeuvre un procédé de transmission sécurisée d'une image (IM1) stockée dans la mémoire d'un document d'identité (100) vers un premier terminal (120) apte à recevoir ladite image (IM1), le document d'identité (100) comprenant :
- des moyens de réception (A300) d'une requête de lecture de l'image (IM1) en provenance du premier terminal (120),
- des moyens de transmission (A306), à destination du premier terminal (120), d'une requête de lecture d'un attribut (AT) dudit premier terminal (120), ledit attribut (AT) étant un identifiant dudit premier terminal (120),
- des moyens de réception d'un attribut (AT) transmis par le premier terminal (120),
- des moyens de génération (A310) d'un marqueur (MQ) à partir de l'attribut (AT), le marqueur permettant à un tiers d'identifier le premier terminal (120),
- des moyens d'inclusion (A312) dudit marqueur (MQ) dans l'image (IM1), ladite inclusion modifiant l'apparence visuelle de ladite image (IMG) ou l'inclusion comprenant une modification imperceptible Z de ladite image par codage stéganographique, et
- des moyens de transmission (A314) au premier terminal (120) de l'image, dite image modifiée (IM2), contenant ledit marqueur (MQ).

10. Système comprenant un document d'identité (100) selon la revendication 9 et un premier terminal (120) comprenant :
- des moyens de transmission d'une requête de lecture d'une image (IM1),
- des moyens de réception d'une requête de lecture d'un attribut (AT) dudit premier terminal (120), ledit attribut étant un identifiant dudit premier terminal (120),
- des moyens de transmission de l'attribut (AT), et,
- des moyens de réception de l'image (IM1) dans laquelle est inclus un marqueur permettant à un tiers d'identifier le premier terminal (120).

## Patentansprüche

1. Verfahren zur gesicherten Übertragung eines im Speicher eines Ausweisdokuments (100) gespeicherten Bilds (IM1) zu einem ersten Endgerät (120), das fähig ist, das Bild (IM1) zu empfangen, wobei das Verfahren vom Ausweisdokument (100) durchgeführt wird, **dadurch gekennzeichnet, dass** das Verfahren enthält:
- den Empfang (A300) einer vom ersten Endgerät (120) kommenden Leseanforderung des Bilds (IM1),
- die Übertragung (A306) einer Leseanforderung eines Attributs (AT) des ersten Endgeräts (120) an das erste Endgerät (120), wobei das Attribut (AT) eine Kennung des ersten Endgeräts (120) ist,
- den Empfang (A308) des vom ersten Endgerät (120) übertragenen Attributs (AT),
- die Erzeugung (A310) eines Markers (MQ) ausgehend vom Attribut (AT), wobei der Marker es einem Dritten ermöglicht, das erste Endgerät (120) zu erkennen,
- den Einbau (A312) des Markers (MQ) in das Bild (IM1), wobei der Einbau die visuelle Darstellung des Bilds (IMG) ändert oder der Einbau eine nicht wahrnehmbare Änderung des Bilds durch steganographische Codierung enthält, und
- die Übertragung (A314) des den Marker (MQ) enthaltenden Bilds, geändertes Bild (IM2) genannt, an das erste Endgerät (120).

2. Übertragungsverfahren nach Anspruch 1, wobei das Attribut (AT) einen vom Ausweisdokument (100) überprüften Authentifizierungsdatenwert enthält.

3. Übertragungsverfahren nach Anspruch 1, wobei, wenn der Einbau eine Änderung des Bilds durch steganographische Codierung enthält, der in das Bild (IM1) eingebaute Marker (MQ) für das bloße Auge unsichtbar ist.

4. Übertragungsverfahren nach einem der Ansprüche 1 bis 3, wobei der Marker (MQ) bei der Erzeugung durch Verschlüsselung hinsichtlich der Vertraulichkeit geschützt wird.

5. Übertragungsverfahren nach einem der Ansprüche 1 bis 4, wobei der Marker (MQ) bei der Erzeugung hinsichtlich der Integrität und/oder Authentizität durch Signatur des Attributs (AT) des ersten Endgeräts (120) geschützt wird.

6. Übertragungsverfahren nach einem der Ansprüche 1 bis 5, wobei das Ausweisdokument (100) ein elektronischer Reisepass ist, wobei das vom Ausweisdokument (100) empfangene Attribut (AT) vom ersten Endgerät (120) gemäß dem in den Richtlinien "TR 03110 v1.11" spezifizierten Protokoll "Extended Access Control" übertragen wird.

7. Computerprogramm (P1), das Anweisungen zur Ausführung der Schritte eines Übertragungsverfahrens nach einem der Ansprüche 1 bis 6 aufweist, wenn das Programm (P1) von einem in ein Ausweisdokument (100) integrierten Mikroprozessor ausgeführt wird.

8. Computerlesbarer Speicherträger, auf dem ein Computerprogramm (P1) gespeichert ist, das Anweisungen zur Ausführung der Schritte eines Übertragungsverfahrens nach einem der Ansprüche 1 bis 6 enthält.

9. Ausweisdokument (100), das fähig ist, ein gesichertes Übertragungsverfahren eines im Speicher eines Ausweisdokuments (100) gespeicherten Bilds (IM1) zu einem ersten Endgerät (120) durchzuführen, das fähig ist, das Bild (IM1) zu empfangen, wobei das Ausweisdokument (100) enthält:
- Einrichtungen zum Empfang (A300) einer vom ersten Endgerät (120) kommenden Leseanforderung des Bilds (IM1),
- Einrichtungen zur Übertragung (A306) einer Leseanforderung eines Attributs (AT) des ersten Endgeräts (120) an das erste Endgerät (120), wobei das Attribut (AT) eine Kennung des ersten Endgeräts (120) ist,
- Einrichtungen zum Empfang eines vom ersten Endgerät (120) übertragenen Attributs (AT),
- Einrichtungen zur Erzeugung (A310) eines Markers (MQ) ausgehend vom Attribut (AT), wobei der Marker es einem Dritten ermöglicht, das erste Endgerät (120) zu erkennen,
- Einrichtungen zum Einbau (A312) des Markers (MQ) in das Bild (IM1), wobei der Einbau die visuelle Darstellung des Bilds (IMG) ändert oder der Einbau eine nicht wahrnehmbare Änderung des Bilds durch steganographische Codierung enthält, und
- Einrichtungen zur Übertragung (A314) des den Marker (MQ) enthaltenden Bilds, geändertes Bild (IM2) genannt, an das erste Endgerät (120).

10. System, das ein Ausweisdokument (100) nach Anspruch 9 und ein erstes Endgerät (120) enthält, das enthält:
- Einrichtungen zur Übertragung einer Leseanforderung eines Bilds (IM1),
- Einrichtungen zum Empfang einer Leseanforderung eines Attributs (AT) des ersten Endgeräts (120), wobei das Attribut eine Kennung des ersten Endgeräts (120) ist,
- Einrichtungen zur Übertragung des Attributs (AT), und
- Einrichtungen zum Empfang des Bilds (IM1), in das ein Marker eingebaut ist, der es einem Dritten ermöglicht, das erste Endgerät (120) zu erkennen.

## Claims

1. Method for the secure transmission of an image (IM1) stored in the memory of an identity document (100) to a first terminal (120) able to receive said image (IM1), said method being implemented by said identity document (100), **characterized in that** said method comprises:
- receiving (A300), from the first terminal (120), a request to read the image (IM1),
- transmitting (A306), to the first terminal (120), a request to read an attribute (AT) of said first terminal (120), said attribute (AT) being an identifier of said first terminal (120),
- receiving (A308) the attribute (AT) transmitted by the first terminal (120),
- generating (A310) a marker (MQ) based on the attribute (AT), the marker allowing a third party to identify the first terminal (120),
- including (A312) said marker (MQ) in the image (IM1), said inclusion modifying the visual appearance of said image (IMG) or said inclusion comprising an imperceptible modification of said image performed using steganographic coding, and
- transmitting (A314) the image, referred to as modified image (IM2), containing said marker (MQ) to the first terminal (120).

2. Transmission method according to Claim 1, wherein the attribute (AT) comprises an authentication datum that is verified by the identity document (100).

3. Transmission method according to Claim 1, wherein, if the inclusion comprises a modification of said image performed using steganographic coding, said marker (MQ) included in the image (IM1) is invisible to the naked eye.

4. Transmission method according to any one of Claims 1 to 3, wherein, during the generation, the marker (MQ) is confidentiality-protected by encryption.

5. Transmission method according to any one of Claims 1 to 4, wherein, during the generation, the marker (MQ) is integrity-protected and/or authenticity-protected by signing the attribute (AT) of the first terminal (120).

6. Transmission method according to any one of Claims 1 to 5, wherein the identity document (100) is an electronic passport,
wherein said attribute (AT) received by the identity document (100) is transmitted by the first terminal (120) in accordance with the "Extended Access Control" protocol specified in the "TR 03110 v1.11" guidelines.

7. Computer program (P1) comprising instructions for executing the steps of a transmission method according to any one of Claims 1 to 6 when said program (P1) is executed by a microprocessor integrated into an identity document (100).

8. Recording medium able to be read by a computer and on which there is recorded a computer program (P1) comprising instructions for executing the steps of a transmission method according to any one of Claims 1 to 6.

9. Identity document (100) able to implement a method for the secure transmission of an image (IM1) stored in the memory of an identity document (100) to a first terminal (120) able to receive said image (IM1), the identity document (100) comprising:
- means for receiving (A300) a request to read the image (IM1) from the first terminal (120),
- means for transmitting (A306), to the first terminal (120), a request to read an attribute (AT) of said first terminal (120), said attribute (AT) being an identifier of said first terminal (120),
- means for receiving an attribute (AT) transmitted by the first terminal (120),
- means for generating (A310) a marker (MQ) based on the attribute (AT), the marker allowing a third party to identify the first terminal (120),
- means for including (A312) said marker (MQ) in the image (IM1), said inclusion modifying the visual appearance of said image (IMG) or the inclusion comprising an imperceptible modification of said image performed using steganographic coding, and
- means for transmitting (A314) the image, referred to as modified image (IM2), containing said marker (MQ) to the first terminal (120).

10. System comprising an identity document (100) according to Claim 9 and a first terminal (120) comprising:
- means for transmitting a request to read an image (IM1),
- means for receiving a request to read an attribute (AT) of said first terminal (120), said attribute being an identifier of said first terminal (120),
- means for transmitting the attribute (AT), and
- means for receiving the image (IM1), said image including a marker allowing a third party to identify the first terminal (120).
